# EUROPEAN PATENT SPECIFICATION

(11) **EP 4 421 493 B1**
(45) Date of publication and mention of the grant of the patent: **09.09.2026**
(21) Application number: 23158569.6
(22) Date of filing: 24.02.2023
(51) Int. Cl.: G01N 35/04, G01N 21/13

(54) **SAMPLE CHANGING DEVICE AND METHOD OF IMAGING**
PROBENWECHSELVORRICHTUNG UND VERFAHREN ZUR BILDGEBUNG
DISPOSITIF DE CHANGEMENT D'ÉCHANTILLON ET PROCÉDÉ D'IMAGERIE

(43) Date of publication of application: 28.08.2024
(73) Proprietor: XPLORAYTION GmbH, 10115 Berlin (DE)
(72) Inventor: HESSE, Bernhard, 10625 Berlin (DE); SEIM, Christian, 10625 Berlin (DE)
(74) Representative: Vossius & Partner Patentanwälte Rechtsanwälte mbB

(56) References cited:
- WO-A1-2017/003665
- WO-A2-2007/136749
- US-A1- 2018 031 495

## Description

Samples made of one or more materials may be analyzed for a number of reasons, e.g., to detect one or more properties of the respective sample. Generally speaking, samples may be analyzed in a destructive or a non-destructive manner. For instance, a non-destructive analysis may allow the sample to be reused, e.g., for a particular application and/or for further analysis, and is therefore often preferred. Non-destructive analyses also may not require structural manipulation of the respective samples, e.g., by cutting or grinding the respective samples, which may cause one or more complications during the respective analysis, e.g., due to one or more artefacts.

Non-destructive analyses may include imaging the respective sample, e.g., by generating one or more images of the respective sample.

However, analyzing the respective sample(s), in particular via a non-destructive analysis, in particular via imaging, according to the devices and methods known from the prior art has several drawbacks. For instance, the analysis process is often relatively laborious and time-consuming which may reduce or limit the efficiency of the analysis process. Since the operational costs of the analysis process are generally time-based, longer analysis periods generally incur greater costs. This may limit or reduce the economic efficiency of the analysis process.

Moreover, the analysis process according to the devices and methods known from the prior art may be prone to error. For instance, the analysis process using the devices and methods known from the prior art often requires one or more operators of the respective device to manually intervene relatively often. Thus, since human interventions are often prone to error, there is a relatively high risk that one or more errors may occur.

Furthermore, one or more hazards, e.g., radiation, are often present in the environment in which the analysis is performed. Hence, greater human intervention may pose a greater danger to the respective intervener/operator and/or may require greater efforts in installing and operating one or more safety measures, e.g., one or more radiation protections, as a protection, or at least partial protection, against the hazard(s).

US 2018/031495 A discloses a component imaging system comprising a rotatable platform positioned between an x-ray tube and an x-ray detector. The rotatable platform is rotatable about a first rotational axis. A turntable is mounted on top of the rotatable platform. The turntable comprises a stage platform for holding a component and a mounting plate rotating with the rotatable platform about the first rotational axis. WO 2017/003665 A1 discloses an x-ray inspection apparatus comprising an x-ray source, an x-ray detector, and a drive assembly. The drive assembly may be configured to lift a part carrier such that the part carrier is disengaged from a feed assembly and an object mounted on the part carrier is positioned between the x-ray source and the x-ray detector. The feed assembly may be configured to feed part carriers into and out of the x-ray inspection apparatus. The drive assembly may be further configured to subsequently lower the part carrier such that the part carrier is reengaged with the feed assembly.

Thus, there is a need to improve the analysis devices and methods known from the prior art by addressing one or more of the above aspects.

It is therefore an object of the present invention to improve one or more aspects related to analyzing samples, in particular by at least partially alleviating one or more of the above-mentioned drawbacks.

The above-identified object is achieved by a sample changing device according to a first aspect of the present disclosure, as defined by the features of claim 1. Preferred embodiments are defined by the features of the dependent claims, respectively. The invention is specified by the independent claims. Preferred embodiments are defined in the dependent claims. In the following description, although numerous features may be designated as optional, it is nevertheless acknowledged that all features comprised in the independent claims are not to be read as optional.

The sample changing device may be configured to change samples of a plurality of samples for at least one imaging device. Changing samples of a plurality of samples for at least one imaging device may mean that an orientation and/or a position of the respective samples to be changed relative to the at least one imaging device is/are altered by the sample changing device, in particular between imaging consecutive samples of the plurality of samples. For instance, after the at least one imaging device has imaged one or more first samples of the plurality of samples and one or more second samples of the plurality of samples are to be imaged next, an orientation and/or a position of the one or more first samples and/or the one or more second samples relative to the at least one imaging device may be altered by the sample changing device.

The at least one imaging device may be configured to at least partially image each sample of the plurality of samples. To "image", within the context of the present disclosure, may include any type of technology, i.e., by means of the at least one imaging device, for at least partially representing and/or reproducing one or more features, preferably structural features, of the respective sample, e.g., the sample's appearance, shape, dimension(s), finish, etc. This may include, e.g., radiation-based imaging, optical-based imaging, acoustic imaging, chemical imaging, infrared imaging, and/or any other type of imaging technology. Thus, the at least one imaging device may include at least one source of at least one imaging medium which the sample may be exposed to and at least one receiver configured to at least partially receive or detect the at least one imaging medium, in particular after the sample has been exposed to the at least one imaging medium and/or while the sample is being exposed to the at least one imaging medium. One or more features of the respective sample may be represented and/or reproduced based at least partially on at least a portion of the at least one imaging medium which is received and/or detected by the at least one receiver.

The at least one imaging device may or may not be included in the sample changing device.

The sample changing device may include at least one sample holder configured to receive the plurality of samples simultaneously. In other words, the at least one sample holder may be configured to hold or carry the plurality of samples at the same time, e.g., such that two or more of the plurality of samples may be imaged consecutively without having to exchange samples, i.e., by reloading the at least one sample holder, first. Optionally, at least some of the plurality of samples may be imaged at least partially simultaneously. For instance, the sample changing device may be configured to maneuver two or more samples into an imaging field, e.g., a field of view, of the at least one imaging device simultaneously, e.g., by attaching and/or arranging the two or more samples to and/or into a sample retaining device which is at least partially received in and/or secured by the at least one sample holder (the sample retaining device is described further below in more detail). For instance, the two or more samples may be arranged in a stacked manner, i.e., on top of each other, and/or side-by-side, in contact with each other or separated from each other, when being imaged at least partially simultaneously.

For instance, the at least one sample holder may be configured such that the plurality of samples are arrangeable in at least one array in or on at least a section of the at least one sample holder. The samples may be arranged in an intermediate structure, e.g., a sample tray, which may be at least partially received and/or supported by the at least one sample holder.

The sample changing device may include at least one maneuvering device configured to maneuver at least one sample of the plurality of samples, in particular at least between imaging of consecutive samples of the plurality of samples, when the plurality of samples is received by the at least one sample holder. In other words, the at least one maneuvering device may be configured to maneuver at least one sample of the plurality of samples in a state in which the plurality of samples is received by the at least one sample holder, e.g., such that the samples are arranged in at least one array.

As detailed at the beginning, the devices and methods known from the prior art often require one or more operators of the respective device to manually intervene relatively frequently, in particular by manually replacing a first sample, which has been analyzed/imaged, by a second sample, which is to be analyzed/imaged next. However, such manual intervention is relatively laborious, time intensive, cost intensive, prone to human error, and may pose a danger to the respective operator(s). For instance, for many imaging technologies, e.g., radiation-based technologies, the operator often must perform a protection safety check, e.g., a radiation protection safety check, in the environment where the analysis is performed and/or must ensure that there are no other persons left in the room after each intervention. This procedure must be performed each time a new sample is set up and may take several minutes, e.g., 2 to 3 minutes, per sample on average which is a significant overhead compared with the respective measurement times, e.g., of 0.5 to 5 minutes. This may reduce or limit the competitiveness of many imaging technologies, e.g., ultrafast synchrotron-based micro-computed tomography devices, and may increase the total costs for the customer(s).

Thus, the sample changing device described herein may provide a greater degree of automation compared with the devices and methods known from the prior art which may reduce human intervention. For instance, configuring the at least one maneuvering device to maneuver at least one sample of the plurality of samples, in particular at least between imaging of consecutive samples of the plurality of samples, when the plurality of samples is received by the at least one sample holder, may reduce manual intervention, e.g., such that the plurality of samples may be imaged consecutively without having to exchange samples, i.e., by reloading the at least one sample holder, first.

Hence, in contrast to the devices and methods known from the prior art, the sample changing device described herein may allow the plurality of samples to be prepared and loaded into or onto the at least one sample holder which are then imaged without the need to exchange samples, i.e., without or with only minimal manual/human intervention. Once the plurality of samples has been imaged, the operator may remove the samples and, e.g., by replacing the plurality of samples with a further plurality of samples to be imaged. For instance, the plurality of samples may be prepared ahead of time, e.g., in one or more mobile samples trays, while a previous plurality of samples is being imaged.

Moreover, the sample changing device may enable the samples to be positioned and/or orientated relative to the at least imaging device with a relatively high accuracy, e.g., compared with a manual exchange of samples.

Robots for exchanging samples, rather than a manual exchange of samples, are also known from the prior art. However, this still has one or more drawbacks. For instance, in most cases, samples are still exchanged individually one by one after each imaging procedure by means of the robot. This still requires a relatively long procedure between imaging processes, e.g., since the robot must grasp and remove the sample which has been imaged and grasp and move a sample to be imaged in place.

Moreover, robots require a relatively large amount of space and are very cost intensive. By contrast, the sample changing device described herein is relevantly simple, compact and less expensive. Moreover, the sample changing device described herein can be used on almost any beamline due to its compactness.

Hence, the sample changing device described herein may reduce downtime of the imaging device which may increase the efficiency and/or reduce the costs of the imaging process.

For instance, for at least some technologies and/or fields of application, the sample changing device described herein may reduce periods for changing samples between imaging processes from 2 minutes to around 10 seconds per sample.

The at least one maneuvering device may be configured to maneuver at least one sample of the plurality of samples which is to be imaged into an imaging position in which the at least one sample can be imaged, e.g., an imaging position in which the at least one sample can be exposed to at least one imaging medium, e.g., radiation, which may be generated by the at least one imaging device and/or in which the at least one sample is in a field of view of the at least one imaging device, e.g., a camera.

Alternatively, the at least one maneuvering device may be configured to maneuver at least one sample of the plurality of samples which is to be imaged into a pre-position from which the at least one sample can be brought into the imaging position, e.g., by moving the at least one sample vertically.

Alternatively, or additionally, the at least one maneuvering device may be configured to maneuver one or more samples of the plurality of samples which have already been imaged, e.g., by maneuvering the one or more samples of the plurality of samples out of one or more imaging positions.

The at least one maneuvering device may be configured to maneuver the respective sample(s) by rotating and/or translationally moving the respective sample(s). The at least one maneuvering device may be configured to maneuver the respective sample(s) in a single plane, e.g., in a horizontal plane or an x-y-plane. The at least one maneuvering device may be configured to maneuver the respective sample(s) translationally in a single plane.

The sample changing device may include one or more guide elements, preferably one or more rails, along which the at least one sample holder is translationally maneuverable by the at least one maneuvering device, preferably in a single plane.

The at least one maneuvering device may be configured to maneuver the respective sample(s) by following one or more commands provided by an operator, e.g., via a remote controller, and/or automatically. For instance, the at least one maneuvering device may be configured to maneuver, the respective sample(s) after one or more criteria are met, e.g., after a certain time threshold has been surpassed, e.g., a certain imaging time. Alternatively, or additionally, the at least one maneuvering device may be provided with at least one signal to trigger the at least one maneuvering device to maneuver the respective sample(s), e.g., at least one signal provided by the at least one imaging device and/or at least one operator/user that the imaging process of one or more particular samples has been completed.

As stated above, the at least one imaging device may be configured as any device capable of imaging the samples, e.g., via radiation-based imaging, optical-based imaging, acoustic imaging, chemical imaging, and/or any other type of imaging technology. For instance, the at least one imaging device may be an x-ray device. Preferably, the at least one imaging device is a tomography device, preferably a synchrotron-based micro-computed tomography device, also referred to as an SR micro-CT or µCT.

The at least one sample holder may be configured to receive at least one sample tray which includes the plurality of samples.

The at least one sample holder may be configured to receive the plurality of samples such that the plurality of samples is arranged in at least one array pattern. The at least one array pattern may include a plurality of columns and/or a plurality of rows of samples. This may allow the samples to be received by the at least one sample holder in a relatively dense manner, i.e., with a relatively high packing density. This may reduce the space required for receiving the samples and/or may increase the number of samples which may be received by the at least one sample holder simultaneously. For instance, the samples may be arranged in an array having any size and/or number of samples, e.g., 6x6 samples, 20x20 samples, 50x50 samples, 100x100 samples, or greater.

The sample changing device may be configured such that the plurality of samples can be imaged sequentially or consecutively by the at least one imaging device. Additionally, at least some of the plurality of samples may be imaged at least partially simultaneously. Imaging the plurality of samples sequentially or consecutively by the at least one imaging device means that the plurality of samples may be imaged by the at least one imaging device one after another without reloading the at least one sample holder, with or without a pause between each imaging process of each sample.

The at least one maneuvering device may be configured to maneuver the at least one sample holder. In other words, the at least one maneuvering device may be configured to maneuver the plurality of samples simultaneously, i.e., by maneuvering the entire sample holder, e.g., by rotating and/or translationally moving the sample holder.

Alternatively, or additionally, the sample changing device may further include at least one displacement device configured to displace at least one sample of the plurality of samples relative to the at least one sample holder. Thus, the sample changing device may include at least two devices for moving the respective sample(s), i.e., the at least one maneuvering device and the at least one displacement device. For instance, the at least one maneuvering device may be configured to maneuver the respective sample(s) in one or more first directions and/or in at least one first plane, e.g., in a horizontal plane or an x-y-plane, and the at least one displacement device may be configured to displace the respective sample(s) in one or more second directions and/or in at least one second plane.

The at least one maneuvering device and the at least one displacement device may be configured to move the at least one sample simultaneously and/or sequentially. For instance, the at least one maneuvering device may be configured to maneuver the respective sample(s) into a first position, e.g., a pre-imaging position, and the at least one displacement device may be configured to displace the respective sample(s) from the first position to at least a second position, e.g., an imaging position in which the respective sample(s) can be imaged by the at least one imaging device.

Preferably, the at least one maneuvering device may be configured to maneuver the respective sample(s) in at least one maneuvering plane, e.g., in a horizontal plane or an x-y-plane, and the at least one displacement device may be configured to displace the respective sample(s) in one or more displacement directions which are substantially perpendicular to the at least one maneuvering plane. For instance, the at least one maneuvering plane may be configured to maneuver the respective sample(s) into a pre-position which is aligned with and/or adjacent to an imaging position, in which the respective sample(s) can be imaged by the at least one imaging device, and the at least one displacement device may be configured to displace the respective sample(s) from the pre-position to the imaging position, e.g., in a direction which is substantially perpendicular to a plane and/or direction in which the respective sample(s) is/are maneuvered by the at least one maneuvering device.

The at least one displacement device may be configured to remain stationary, when the at least one maneuvering device maneuvers the at least one sample holder. For instance, the at least one maneuvering device may be configured to first maneuver one or more samples arranged in the at least one sample holder, e.g., into a pre-position which is aligned with an imaging position in which the respective sample(s) can be imaged by the at least one imaging device, and the at least one displacement device may be configured to then displace the respective sample(s), e.g., from the pre-position to the imaging position, e.g., in a direction which is substantially perpendicular to a plane or direction in which the respective sample(s) is/are maneuvered by the at least one maneuvering device. The at least one displacement device may be configured to remain stationary, when the at least one maneuvering device maneuvers the at least one sample holder, at least relative to at least one rotating device, e.g., at least one turntable, configured to rotate the respective sample(s) about an axis of rotation, at least partially while the respective sample is being imaged by the at least one imaging device.

The at least one displacement device may be configured to displace each sample, preferably individually, along a longitudinal axis and/or an axis of symmetry of the respective sample.

The sample changing device may be configured to rotate, e.g., by means of one or more rotating devices, each sample of the plurality of samples about an axis of rotation, at least partially while the respective sample is being imaged by the at least one imaging device. This may allow the respective sample to be imaged about a circumference, preferably the entire circumference, of the respective sample in a relatively efficient manner, e.g., by rotating the respective sample. In such a configuration, the at least one imaging device may remain stationary, while the respective sample is being imaged by the at least one imaging device.

Alternatively, the at least one imaging device may be movable, e.g., rotatable, relative to the at least one imaging device.

Alternatively, the means, e.g., the one or more rotating devices, for rotating each sample of the plurality of samples about an axis of rotation, at least partially while the respective sample is being imaged by the at least one imaging device, may not be part of the sample changing device. In other words, the means, e.g., the one or more rotating devices, for rotating each sample of the plurality of samples about an axis of rotation, at least partially while the respective sample is being imaged by the at least one imaging device, may a separate device with which the sample changing device is configured to cooperate and/or interact to allow the sample(s) received by the at least one sample holder to be rotated, at least partially while the respective sample is being imaged by the at least one imaging device. For instance, the means for rotating each sample of the plurality of samples about an axis of rotation, at least partially while the respective sample is being imaged by the at least one imaging device, may be a turntable on which the sample changing device may be arranged and removed on demand. This may facilitate mobility of the sample changing device, e.g., which may allow the sample changing device to be more easily moved to and used in different locations. Moreover, this may reduce the complexity and costs of the sample changing device.

The sample changing device may be configured to rotate the at least one sample holder, and thus all of the plurality of samples received therein simultaneously. Alternatively, the sample changing device may be configured to rotate each sample individually, e.g., by rotating each sample individually relative to the at least one sample holder.

The sample changing device may be configured to rotate each sample of the plurality of samples about an axis of rotation, at least partially while the respective sample is being imaged by the at least one imaging device, by at least 180°, preferably by at least 360°.

The sample changing device may be configured such that the axis of rotation coincides with a longitudinal axis and/or an axis of symmetry of the respective sample being rotated.

The sample changing device may be configured such that a spatial position and a spatial orientation of the axis of rotation is substantially identical for each sample of the plurality of samples. In other words, the sample changing device may be configured such that the axis of rotation remains in the same absolute position and the same absolute orientation in space for each sample of the plurality of samples. This may allow the at least one imaging device to remain stationary at least between the imaging processes of consecutive samples. In other words, the at least one imaging device does not need to be moved to change samples, since the axis of rotation remains aligned with the at least one imaging device throughout all of the samples.

For instance, the sample changing device may include at least one rotating device, such as a turntable, which is operably connected to the at least one sample holder such that the at least one rotating device is configured to rotate the at least one sample holder and the at least one maneuvering device. The sample changing device may be configured such that the at least one rotating device remains substantially in the same absolute/spatial location, while imaging the plurality of samples. This may allow the axis of rotation to remain in the same absolute position and the same absolute orientation in space for each sample of the plurality of samples. The at least one maneuvering device may be configured to maneuver the sample, relative to the at least one rotating device, to the axis of rotation of the at least one rotating device. As discussed above, alternatively, or additionally, the sample changing device may be configured to cooperate and/or interact with one or more rotating devices which are not part of the sample changing device.

The at least one maneuvering device may be configured to maneuver the respective sample to be imaged to a position through which the axis of rotation extends. In other words, since the axis of rotation may remain in the same absolute position and the same absolute orientation in space for each sample of the plurality of samples, the respective sample to be imaged is maneuvered to the axis of rotation. Hence, the at least one maneuvering device may position the respective sample to be imaged on the axis of rotation.

The at least one maneuvering device may include one or more motors to maneuver the respective sample(s). Alternatively, or additionally, the at least one displacement device may include one or more motors to displace the respective sample(s).

The sample changing device may be configured such that the axis of rotation of each sample of the plurality of samples is coincident to the axis of rotation of each further sample of the plurality of samples.

The sample changing device may further include a plurality of sample retaining devices which are each configured to retain, and optionally manipulate, each sample, preferably each sample individually. The plurality of sample retaining devices may be configured to be received by the at least one sample holder. The sample retaining devices may include any device configured to retain, and optionally manipulate, each sample. For instance, the sample retaining devices may include an Eppendorf tube and/or a shaft in or on which the respective sample is attachable. The sample retaining devices may include at least one body in or on which the respective sample is receivable and/or attachable, e.g., clampable. At least a portion of the sample retaining devices may be made by 3D printing. The sample retaining devices may be at least partially cone shaped, which may facilitate securing the sample retaining devices in or on the at least one sample holder.

The sample retaining devices may be configured to engage with the at least one sample holder and/or with at least one sample tray configured to receive the plurality of samples. The at least one sample holder may be configured to at least partially receive and/or support the at least one sample tray.

The at least one displacement device may include at least one securing device, preferably at least one magnet, configured to interact with at least a portion of the sample and/or at least a portion of the respective sample retaining device to retain the sample and/or the sample retaining device(s) on the at least one displacement device. This may allow the respective sample retaining device to be retained on the at least one displacement device, e.g., which may increase the precision in displacing the sample by means of the at least one displacement device and/or may prevent the sample retaining device from dislodging, e.g., from the at least one displacement device and/or the sample changing device. The sample and/or the sample retaining devices may be at least partially made of a ferromagnetic material. Alternatively, or additionally, the sample and/or the sample retaining devices may include at least one magnet and the at least one displacement device may be at least partially made of a ferromagnetic material to secure the sample retaining devices to the at least one displacement device.

The at least one displacement device may include at least one drivable pusher configured to push the sample and/or the sample retaining device to an imaging position. A magnet, e.g., the magnet mentioned above, may be attached to the at least one drivable pusher. The imaging position may be a position in which the respective sample may be imaged by the at least one imaging device, e.g., in a field of view of the at least one imaging device.

The at least one maneuvering device may be configured to maneuver the at least one sample holder translationally and/or rotationally.

The at least one maneuvering device may be configured to maneuver the at least one sample holder between imaging of consecutive samples of the plurality of samples such that the sample to be imaged is aligned with the imaging device, preferably in-line with an imaging field, e.g., a field of view, of the imaging device.

The at least one sample holder may include at least one housing configured to at least partially house the plurality of samples. The at least one housing may have one or more walls, preferably one or more side walls, which extend beyond each of the plurality of samples. In other words, the configuration and/or dimensions of the at least one housing may allow the samples to be completely enclosed within the housing. This may allow, for instance, to close the at least one sample holder by, e.g., simply by placing a lid on the at least one housing. The at least one housing may be configured to receive, preferably completely receive, a sample tray configured to receive and/or secure the plurality of samples.

The at least one sample holder may include at least one securing device configured to secure, preferably releasably secure, the plurality of samples. For instance, the at least one securing device may include, but is not limited to, one or more screws, e.g., grub screws, one or more clips, one or more snap-fits, one or more tongue/groove connections, etc. The at least one securing device may be configured to secure the plurality of samples directly, e.g., by engaging with the respective samples(s), and/or indirectly, e.g., by releasably securing an intermediate structure, e.g., a sample tray, configured to receive and/or secure the plurality of samples.

The sample changing device may be configured such that the samples can be imaged individually and/or sequentially by the at least one imaging device, while the at least one imaging device remains stationary. This may reduce the complexity and/or construction efforts relating to the at least one imaging device.

The sample changing device may further include at least one cover element configured to cover, preferably selectively and/or removably cover, at least a section of the at least one sample holder, preferably a top section of the at least one sample holder. This may allow the samples which are not being imaged to be protected, e.g., from substances which may adversely affect the samples. Moreover, this may prevent the samples which are not being imaged from interfering with or affecting the imaging process of the sample being imaged, or at least reduce the risk thereof.

The at least one cover element may include at least one opening. The sample changing device may be configured to temporarily displace, preferably by means of the at least one displacement device, each sample at least partially through the at least one opening, preferably one sample at a time, in a state in which the respective sample is being imaged.

The sample changing device may be configured to allow, i.e., passively allow, the sample to retract from the opening. Alternatively, or additionally, the sample changing device may be configured to actively move the sample to retract from the opening, e.g., by exerting one or more forces and/or moments on the sample, after imaging of the respective sample has been completed.

The sample changing device may be configured to sequentially displace, i.e., one after another, preferably by means of the at least one displacement device, the samples at least partially through the at least one opening.

The at least one cover element may include a plurality of openings. Each opening may be associated with one sample of the plurality of samples. Thus, the sample changing device may be configured such that each sample of the plurality of samples received by the at least one sample holder protrudes through a separate or individual opening of the plurality of openings.

The sample changing device may further include at least one closure element configured to at least partially close the opening(s). The at least one closure element may be movable, preferably deflectable by at least one of the samples, preferably as the respective sample is displaced at least partially through the at least one opening, to allow the sample(s) to be displaced through the at least one opening. For instance, the at least one closure element may be configured as or may include, e.g., one or more lamellae.

The sample changing device may further include at least one sheet which includes a plurality of the at least one closure element to cover a plurality of the openings. The at least one sheet may be configured as a mesh, preferably made of silicone. Each closure element, or a group of closure elements of the plurality of closure elements, may be individually associated with one of the openings.

The at least one closure element may be configured to engage with at least a section, preferably a plurality of sections, of the respective sample and/or the respective sample retaining device, at least when the respective sample protrudes through the respective opening. This may allow the respective sample and/or the respective sample retaining device to be supported and/or stabilized by the at least one closure element, e.g., to reduce unwanted/unintentional movement of the respective sample and/or the respective sample retaining device, e.g., due to vibrations.

Preferably, the sample changing device is wirelessly powerable/operable. In other words, the sample changing device does not rely on a cable for supplying power to the sample changing device.

The at least one maneuvering device may be electrically driven, preferably battery driven. The sample changing device may include an electrical connection and/or one or more batteries, preferably one or more exchangeable and/or rechargeable batteries.

The sample changing device may be configured to be coupled to a wireless communication connection, e.g., Bluetooth or wireless LAN. This may allow the sample changing device to be controlled wirelessly and/or to exchange data with the sample changing device wirelessly.

The present disclosure further relates to a kit according to a second aspect. The features, configurations, and advantages described above with respect to the sample changing device apply to the kit accordingly.

The kit may include at least one sample changing device according to any of the configurations described herein. The kit may further include at least one sample tray. The at least one sample tray may include at least one securing section configured to secure, or at least support, the plurality of samples. The at least one sample holder of the at least one sample changing device may be configured to at least partially receive the at least one sample tray.

The kit may include a plurality of the at least one sample tray. The plurality of sample trays may be configured to be received interchangeably by the at least one sample holder of the at least one sample changing device.

The present disclosure further relates to an imaging system according to a third aspect. The features, configurations, and advantages described above with respect to the sample changing device apply to the imaging system accordingly.

The imaging system may include at least one imaging device configured to at least partially image each of a plurality of samples and at least one sample changing device according to any of configurations described herein.

The at least one imaging device may be configured as a radiation-based imaging device, preferably an x-ray-based imaging device, preferably a micro-computed tomography device.

The at least one imaging device may include at least one source of an imaging medium, e.g., a source of radiation, and at least one detector configured to detect the imaging medium.

Preferably the imaging device is configured as a tomography device, preferably a synchrotron-based micro-computed tomography device, also referred to as an SR micro-CT or µCT.

The present disclosure further relates to a sample tray according to a fourth aspect. The features, configurations, and advantages described above with respect to the sample changing device apply to the sample tray accordingly.

The sample tray may be configured for use with at least one imaging device configured to at least partially image each of a plurality of samples, including at least one securing section configured to movably secure the plurality of samples simultaneously. The sample tray may be configured to allow at least one sample of the plurality of samples to be maneuvered at least between imaging of consecutive samples of the plurality of samples to allow each of the plurality of samples to be imaged by the at least one imaging device.

The term "movably secure" means that the at least one securing section is configured to allow one or more degrees of freedom while preventing, or at least limiting, movement in one or more directions and/or axes.

The sample tray may include at least one housing configured to at least partially house the plurality of samples. The at least one housing may have one or more walls which extend beyond each of the plurality of samples.

The at least one housing may be at least partially open at one or more open sections on at least one side of the at least one housing. The one or more open sections may be closeable by at least one closure element, e.g., a lid or cover.

The present disclosure further relates to a method of imaging a plurality of samples according to a fifth aspect. The features, configurations, and advantages described above with respect to the sample changing device apply to the method accordingly.

The method may include:
(a) imaging at least one first sample of the plurality of samples, which are received in at least one sample holder, by means of at least one imaging device;
(b) maneuvering, after completing imaging of the at least one first sample, the at least one first sample and/or at least one second sample to be imaged next of the plurality of samples by means of at least one sample changing device, preferably by the sample changing device according to any of the configurations described herein, while the plurality of samples (12) is received by the at least one sample holder (18); and
(c) imaging the at least one second sample by means of the at least one imaging device.

Embodiments of the present invention are further elucidated below with reference to the figures. The figures are schematic drawings and as such may not show all details of the systems and their components. Particularly, the drawings are not necessarily to scale and the shown dimensions are only exemplary and may vary. The drawings illustrate exemplary embodiments to provide a thorough understanding of the present invention. The drawings are not intended to limit the scope of the invention, which is defined by the appended claims and is to include the equivalents thereof.
- Fig. 1: shows, in a schematic side view, a sample changing device according to an embodiment of the present disclosure;
- Fig. 2: shows, in a schematic side view, a sample changing device according to an embodiment of the present disclosure;
- Fig. 3: shows, in a schematic side view, a sample changing device according to an embodiment of the present disclosure;
- Fig. 4: shows, in a schematic side view, a displacement device of a sample changing device according to an embodiment of the present disclosure;
- Fig. 5: shows, in a schematic top view, a sample changing device according to an embodiment of the present disclosure;
- Fig. 6: shows, in a further schematic top view, the sample changing device of Fig. 5;
- Fig. 7: shows, in a schematic perspective view, a sample tray;
- Fig. 8: shows, in a schematic perspective view, the sample tray of Fig. 7 received in a sample holder of a sample changing device according to an embodiment of the present disclosure;
- Fig. 9: shows, in a schematic perspective view, a cover element of a sample changing device according to an embodiment of the present disclosure;
- Fig. 10: shows, in a perspective view, a sample changing device according to an embodiment of the present disclosure;
- Fig. 11: shows, in a perspective view, a sample changing device according to an embodiment of the present disclosure;
- Fig. 12: shows, in a perspective view, a sample changing device according to an embodiment of the present disclosure;
- Fig. 13: shows, in a perspective view, a sample changing device according to an embodiment of the present disclosure.

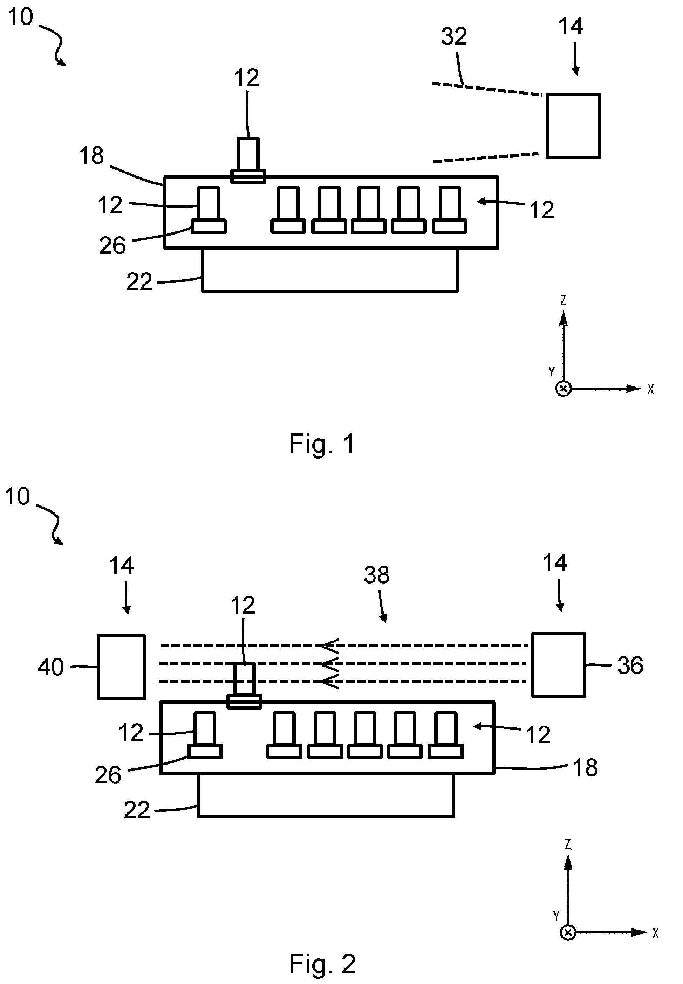

Fig. 1 shows, in a schematic side view, a sample changing device 10 configured to change samples of a plurality of samples 12 for at least one imaging device 14. The at least one imaging device 14 may be configured to at least partially image each sample of the plurality of samples 12. For the sake of clarity, not each sample 12 is individually indicated by a reference sign in the Figs.

The imaging device 14 may be configured as any device capable of imaging the samples 12, e.g., via radiation-based imaging, optical-based imaging, acoustic imaging, chemical imaging, and/or any other type of imaging technology. For instance, the imaging device 14 may be an x-ray device. Preferably, the imaging device 14 is a tomography device, preferably a synchrotron-based micro-computed tomography device, also referred to as an SR micro-CT or µCT.

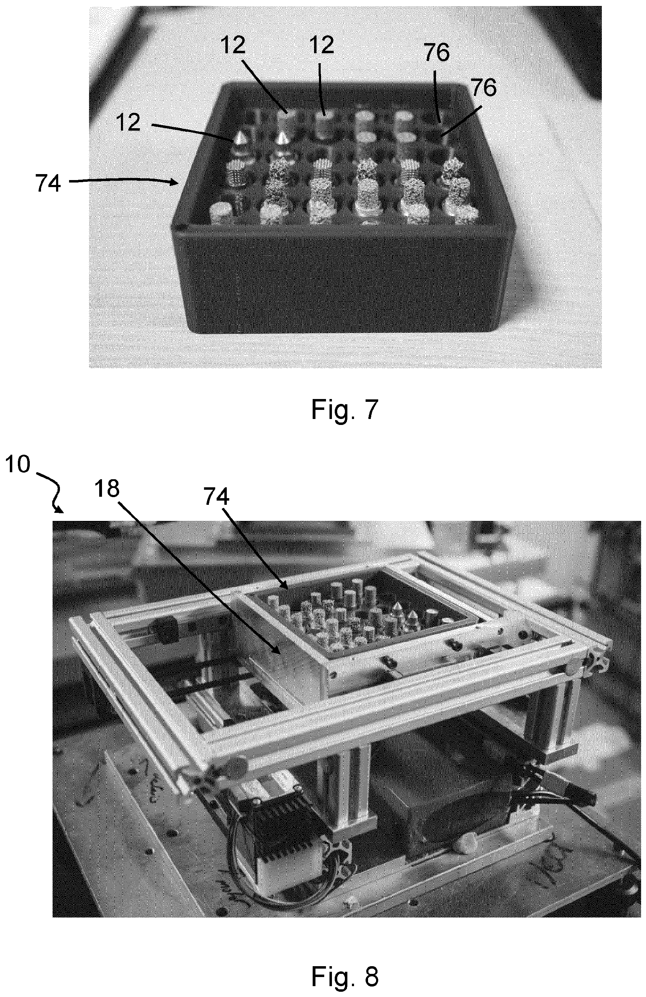

The sample changing device 10 may include at least one sample holder 18 configured to receive the plurality of samples 12 simultaneously. The sample holder 18 may be configured to receive and/or support an intermediate structure, e.g., a sample tray (see Fig. 7 and the corresponding description further below), which may be configured to receive, engage and/or support the samples 12. Alternatively, the samples 12 may be in direct contact or engagement with the one sample holder 18.

The sample changing device 10 may further include at least one maneuvering device 22 configured to maneuver at least one sample of the plurality of samples 12 at least between imaging of consecutive samples of the plurality of samples 12.

As shown in Fig. 1, the sample changing device 10 may further include a plurality of sample retaining devices 26 configured to retain each sample 12 individually, and optionally allow the samples 12 to be manipulated via the sample retaining devices 26. The sample retaining devices 26 may be configured to be received by the sample holder 18. The sample retaining devices 26 may include any device configured to retain each sample 12 individually. For instance, the sample retaining devices 26 may include an Eppendorf tube and/or a shaft in and/or on which the respective sample 12 is attachable. However, a range of further configurations for the sample retaining devices 26 is feasible.

The sample changing device 10 may be configured to move, i.e., rotationally and/or translationally, the samples 12. For instance, the sample changing device 10 may be configured to move or maneuver the samples 12 in one or more planes and/or about one or more axes of rotation. The sample changing device 10 may be configured to maneuver the samples 12 in a horizontal plane, i.e., the x-y plane as shown in Fig. 1 based on the coordinate system shown in the bottom right-hand corner of Fig. 1.

The sample changing device 10 may also be configured to move (or displace or maneuver) the samples 12 perpendicularly to the x-y plane, i.e., vertically, along the z-axis. As shown in Fig. 1, the sample changing device 10 may be configured to position the samples 12 in the x-y plane and, simultaneously and/or sequentially, position one or more samples 12, preferably each sample 12 individually, along the z-axis. This may allow the sample to be exposed to an imaging field 32 of the imaging device 14, which is indicated by dashed lines in Fig. 1.

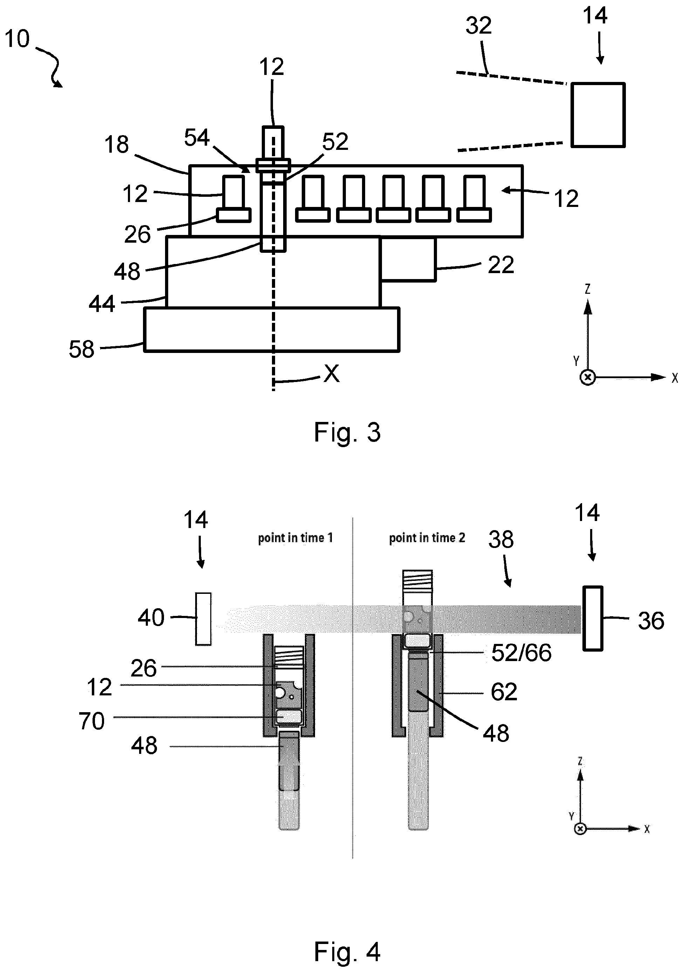

The movement of the samples 12 in the x-y plane and along the z-axis may be provided by a single device, e.g., the maneuvering device 22. Alternatively, the movement of the samples 12 in the x-y plane and along the z-axis may be provided by multiple devices, e.g., by the maneuvering device 22 and one or more additional devices, as shown in Fig. 3 and discussed in more detail further below. In particular, the maneuvering device 22 may be configured to maneuver the entire sample holder 18, and thus all samples 12 simultaneously.

The imaging device 14 may be or include any device for representing or and/or reproducing one or more features, preferably structural features, of the respective sample 12, e.g., the sample's appearance, shape, dimension(s), finish, etc. The imaging device 14 may be configured for, e.g., radiation-based imaging, optical-based imaging, acoustic imaging, chemical imaging, and/or any other type of imaging technology. For instance, the imaging device 14 may be configured as a camera.

As shown in Fig. 2, the imaging device 14 may include at least one source 36 of at least one imaging medium 38 which the sample 12 may be exposed to and at least one receiver 40 configured to at least partially receive or detect the imaging medium 38. One or more features of the respective sample 12 may be represented and/or reproduced based at least partially on at least a portion of the at least one imaging medium 38 which is received or detected by the at least one receiver 40.

As shown in Fig. 3, the sample changing device 10 may further include at least one displacement device 44 configured to displace at least one sample of the plurality of samples 12 relative to the at least one sample holder 18.

The displacement device 44 may include at least one drivable pusher 48 configured to push the sample 12 and the sample retaining device 26 along the z-axis to an elevated position, i.e., an imaging position, into the field of view 32 of the imaging device 14.

A magnet 52 may be provided which is attached to the pusher 48, in particular to an end 54, in particular a distal end, of the pusher 48. The sample 12 and/or the sample retaining devices 26 may be at least partially made of a ferromagnetic material. Alternatively, or additionally, the sample 12 and/or the sample retaining devices 26 may include at least one magnet and the pusher 48 may be at least partially made of a ferromagnetic material to secure the sample retaining devices 26 and the sample 12 to the pusher 48.

The sample changing device 10 may be configured to rotate each sample of the plurality of samples 12 about an axis of rotation X, at least partially while the respective sample 12 is being imaged by the imaging device 14. For the purpose of rotating the samples 12 around the axis of rotation X, the sample changing device 10 may include at least one rotating device 58, e.g., which may be configured as or include at least one turntable, which is operably connected to the sample holder 18 such that the rotating device 58 is configured to rotate the sample holder 18, and optionally also the maneuvering device 22 and the displacement device 44.

Alternatively, or additionally, the sample changing device 10 may be configured to cooperate and/or interact with one or more rotating devices which are not part of the sample changing device 10.

The sample changing device 10 may be configured such that a spatial position and a spatial orientation of the axis of rotation X is substantially identical for each sample of the plurality of samples 12. For instance, the location of the rotating device 58 may be maintained throughout the imaging process of all of the samples 12. The maneuvering device 22 may be configured to maneuver, relative to the displacement device 44 and the rotating device 58, the respective sample 12 to be imaged to a position through which the axis of rotation X extends.

The displacement device 44 may be configured to displace the respective sample(s) 12 in a direction which is parallel to and/or coincident with the axis of rotation X, as shown in Fig. 3.

Fig. 4 shows further details of the displacement device 44. The displacement device 44 may include at least one guide device 62 configured to at least partially guide, preferably linearly, the pusher 48. The pusher 48 may include the magnet 52 and the sample retaining device 26 may include a metal plate 66 at or towards a lower end of the sample retaining device 26. At least one spacer 70 may be provided, e.g., to adjust a position and/or an orientation of the sample 12, e.g., to align the sample 12 with the imaging field 32 and/or the at least one imaging medium 38 of the imaging device 14, when the sample 12 has been displaced, e.g., upwards, by the pusher 48. The left-hand section of Fig. 4 shows the displacement device 44 at a point in time 1, in which the sample 12 has not been displaced by the displacement device 44. The right-hand section of Fig. 4 shows the displacement device 44 at a point in time 2 which is later than the point in time 1, in which the sample 12 has been displaced by the displacement device 44 to an imaging position.

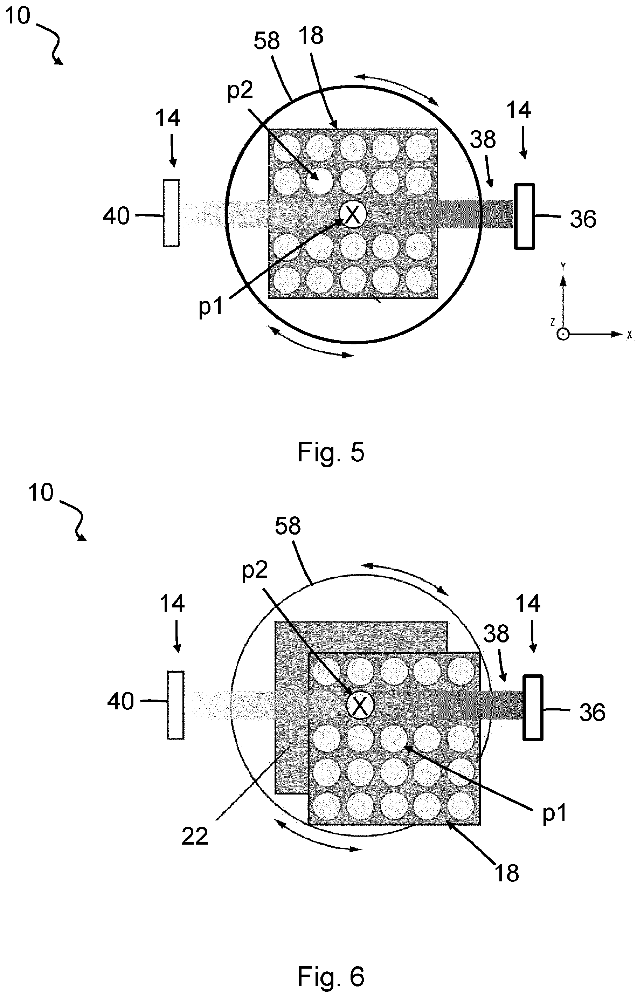

Figs. 5 shows the sample changing device 10 in a state in which sample p1 of the plurality of samples 12, 25 in total in Fig. 5, is being imaged by the imaging device 14 and rotated by the rotating device 58, e.g., a turntable. As shown in Fig. 5, the axis of rotation X, which extends perpendicular to the viewing plane of Fig. 5, may extend through sample p1, in particular along or coincident to a longitudinal axis or an axis of symmetry of sample p1. The sample to be imaged next is sample p2. In the state shown in Fig. 5, sample p1 may be displaced as shown according to the point in time 2 of Fig. 4.

As shown in Fig. 6, the maneuvering device 22 may be configured to maneuver the sample holder 18, relative to the rotating device 58, such that the axis of rotation X of the rotating device 58 extends through sample p2, and no longer through sample p1. In this state, sample p2 may be displaced as shown according to the point in time 2 of Fig. 4 and sample p2 may be rotated by the rotating device 58 and imaged by the imaging device 14.

Fig. 7 shows, in a schematic perspective view, a sample tray 74 configured to receive and/or support the plurality of samples 12 and/or the sample retaining devices 26. The sample tray 74 may be at least partially receivable and/or supportable by the sample holder 18. The sample tray 74 may include a plurality of receiving sections 76, which may be configured as openings or channels as shown in Fig. 7, for at least partially receiving the samples 12 and/or the sample retaining devices 26.

Fig. 8 shows, in a schematic perspective view, the sample tray 74 of Fig. 7 at least partially received in the sample holder 18 of the sample changing device 10.

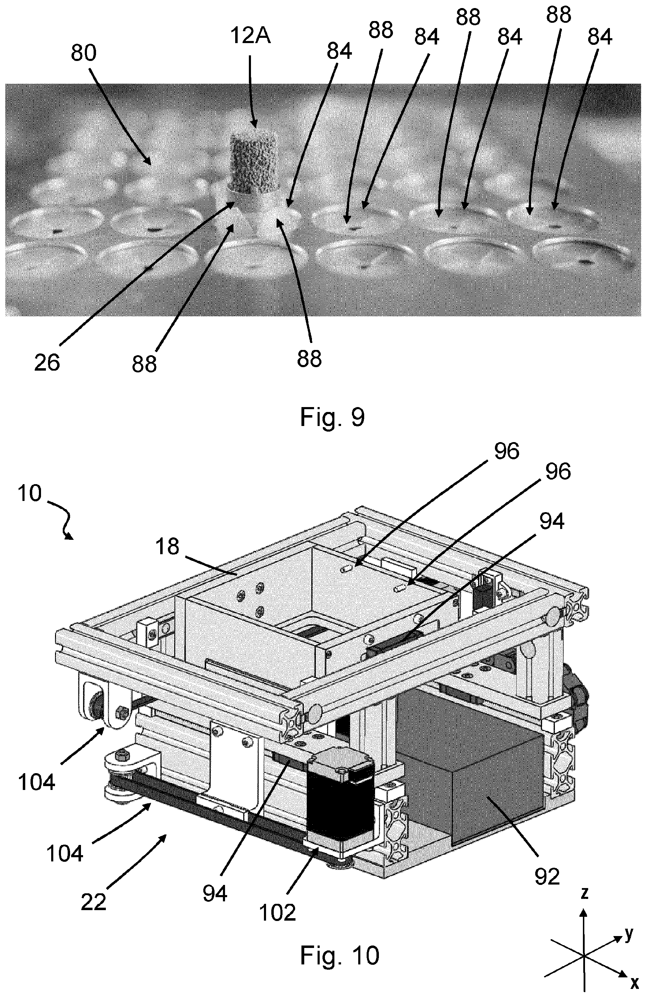

As shown in Fig. 9, the sample changing device 10 may include at least one cover element 80 configured to cover, preferably selectively and/or removably cover, at least a section of the at least one sample holder 18, preferably a top section of the at least one sample holder 18.

The cover element 80 may include at least one opening 84. The sample changing device 10 may be configured to temporarily displace, e.g., by means of the displacement device 44, each sample 12 at least partially through the opening 84, preferably one sample at a time, in a state in which the respective sample 12 is being imaged, as shown in Fig. 9. In other words, the sample 12A shown in Fig. 9 may correspond to the position which the sample 12 is in according to the point in time 2 of Fig. 4.

The sample changing device 10 may further include at least one closure element 88, preferably a plurality of closure elements 88, configured to at least partially close the openings 84, as shown in Fig. 9. The closure element 88 may be movable, preferably deflectable by at least one of the samples 12. For instance, the closure element 88 may be deflectable by the respective sample 12A, as the respective sample 12A is displaced at least partially through the opening 84, to allow the sample(s) 12 to be displaced through the opening 84. Preferably, a plurality of closure elements 88 may be provided at each opening 84. For instance, the closure element(s) 88 may be configured as or may include one or more lamellae, as shown in Fig. 9.

The closure element(s) 88 may be configured to engage with a respective sample retaining device 26, at least when the respective sample 12 attached to the respective sample retaining device 26 protrudes through the respective opening 84 associated with the concerned closure element(s) 88. A state in which the closure element(s) 88 is/are engaged with the sample retaining device 26 is shown in Fig. 9 based on sample 12A. Alternatively, or additionally, the closure element(s) 88 may be configured to engage with at least a section of the sample 12, e.g., sample 12A, at least when the respective sample 12, e.g., sample 12A, protrudes through the respective opening 84.

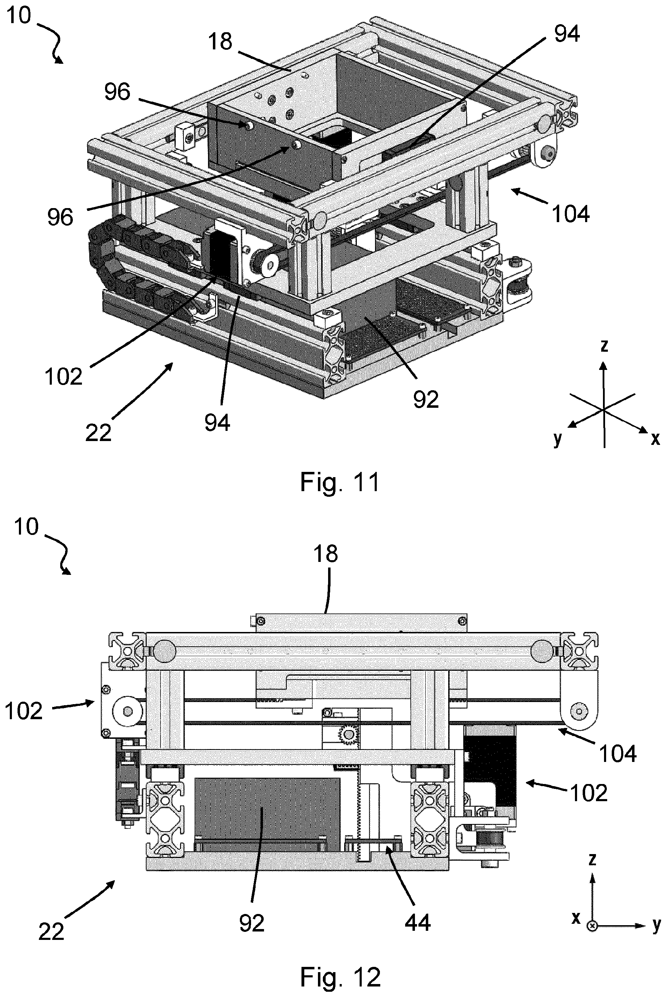

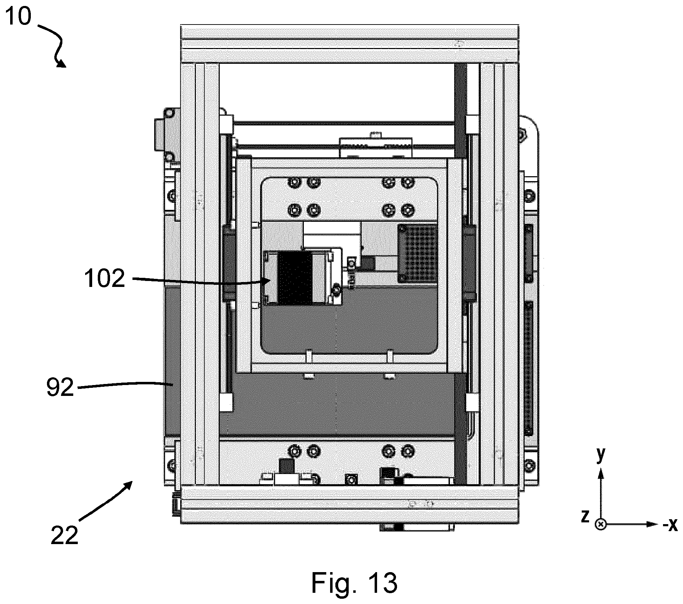

Figs. 10 to 13 show further views of the sample changing device 10. As shown in Fig. 10, the sample changing device 10 may include one or more batteries 92. The sample changing device 10 may also include one or more rails 94 along which the sample holder 18 is translationally maneuverable by the maneuvering device 22, e.g., in a single plane, e.g., the x-y plane as shown in Fig. 10.

The sample holder 18 may include at least one securing device 96 configured to secure, preferably releasably secure, the plurality of samples 12. In particular, the securing device 96 may be configured to secure, preferably releasably secure, a sample tray, e.g., sample tray 74 shown in Figs. 7 and 8. For instance, the securing device 96 may include, but is not limited to, one or more screws, e.g., grub screws, one or more clips, one or more snap-fits, one or more tongue/groove connections, etc.

The maneuvering device 22 and/or the displacement device 44 may include one or more motors 102 to maneuver the respective sample(s) 12. One or more transfer members 104, e.g., one or more belts and/or one or more gearwheels, may be provided to transfer one or more forces and/or moments of the motor(s) 102 to the maneuvering device 22 and/or the displacement device 44 to drive the maneuvering device 22 and/or the displacement device 44, respectively.

## Claims

1. A sample changing device (10) configured to change samples of a plurality of samples (12) for at least one imaging device (14) configured to at least partially image each sample of the plurality of samples (12), including:
at least one sample holder (18) configured to receive the plurality of samples (12) simultaneously;
at least one maneuvering device (22) configured to maneuver at least one sample of the plurality of samples (12) at least between imaging of consecutive samples of the plurality of samples (12), when the plurality of samples (12) is received by the at least one sample holder (18); and
at least one displacement device (44) configured to displace at least one sample of the plurality of samples (12) relative to the at least one sample holder (18),
**characterized in that** the at least one sample holder (18) is configured to receive the plurality of samples (12) such that the plurality of samples (12) is arranged in at least one array pattern including a plurality of columns and a plurality of rows of samples;
wherein the at least one maneuvering device (22) is configured to maneuver the at least one sample holder (18) translationally.

2. The sample changing device (10) according to any of the preceding claims, wherein the sample changing device (10) is configured to rotate each sample of the plurality of samples (12) about an axis of rotation (X), at least partially while the respective sample (12) is being imaged by the at least one imaging device (14).

3. The sample changing device (10) according to claim 2, wherein the sample changing device (10) is configured such that a spatial position and a spatial orientation of the axis of rotation (X) is substantially identical for each sample of the plurality of samples (12).

4. The sample changing device (10) according to claim 3, wherein the at least one maneuvering device (22) is configured to maneuver the respective sample (12) to be imaged to a position through which the axis of rotation (X) extends.

5. The sample changing device (10) according to any of the preceding claims, wherein the at least one displacement device (44) includes at least one drivable pusher (48), preferably on which at least one magnet (52) is attached, the at least one drivable pusher (48) being configured to push the sample (12) to an imaging position.

6. The sample changing device (10) according to any of the preceding claims, further including at least one cover element (80) configured to cover, preferably selectively and/or removably cover, at least a section of the at least one sample holder (18), preferably a top section of the at least one sample holder (18).

7. The sample changing device (10) according to claim 6, wherein the at least one cover element (80) includes at least one opening (84), wherein the sample changing device (10) is configured to temporarily displace, preferably by means of the at least one displacement device (44), each sample (12) at least partially through the at least one opening (84), preferably one sample at a time, in a state in which the respective sample (12) is being imaged.

8. The sample changing device (10) according to claim 6 or 7, wherein the at least one cover element (80) includes a plurality of openings (84), wherein each opening (84) is associated with one sample of the plurality of samples (12).

9. The sample changing device (10) according to claim 7 or 8, further including at least one closure element (88) configured to at least partially close the opening(s) (84), wherein the at least one closure element (88) is movable, preferably deflectable by at least one of the samples (12), preferably as the respective sample (12) is displaced at least partially through the at least one opening (84), to allow the sample(s) (12) to be displaced through the at least one opening (84).

10. The sample changing device (10) according to claim 9, wherein the at least one closure element (88) is configured to engage with at least a section, preferably a plurality of sections, of the respective sample (12) and/or a respective sample retaining device (26), at least when the respective sample (12) protrudes through the respective opening (84).

11. An imaging system including at least one imaging device (14) configured to at least partially image each of a plurality of samples (12) and at least one sample changing device (10) according to any of the preceding claims.

12. The imaging system according to claim 11, wherein the at least one imaging device (14) is configured as a radiation-based imaging device, preferably an x-ray-based imaging device, preferably a micro-computed tomography device.

13. Method of imaging a plurality of samples (12), including:
(a) imaging at least one first sample of the plurality of samples (12), which are received in at least one sample holder (18), by means of at least one imaging device (14), wherein the at least one sample holder (18) is configured to receive the plurality of samples (12) such that the plurality of samples (12) is arranged in at least one array pattern including a plurality of columns and a plurality of rows of samples;
(b) translationally maneuvering, after completing imaging of the at least one first sample, the at least one sample holder (18) to maneuver the at least one first sample and/or at least one second sample to be imaged next of the plurality of samples (12) by means of at least one sample changing device (10), preferably by the sample changing device (10) according to any of claims 1 to 10, while the plurality of samples (12) is received by the at least one sample holder (18);
(c) displacing at least one sample of the plurality of samples (12) relative to the at least one sample holder (18) by means of at least one displacement device (44); and
(d) imaging the at least one second sample by means of the at least one imaging device (14).

## Patentansprüche

1. Probenwechselvorrichtung (10), die dazu eingerichtet ist, Proben mehrerer Proben (12) für mindestens eine Abbildungsvorrichtung (14) zu wechseln, die dazu eingerichtet ist, jede Probe der mehreren Proben (12) mindestens teilweise abzubilden, die einschließt:
mindestens einen Probenhalter (18), der dazu eingerichtet ist, die mehreren Proben (12) gleichzeitig aufzunehmen;
mindestens eine Manövriervorrichtung (22), die dazu eingerichtet ist, mindestens eine Probe der mehreren Proben (12) mindestens zwischen einem Abbilden aufeinanderfolgender Proben der mehreren Proben (12) zu manövrieren, wenn die mehreren Proben (12) durch den mindestens einen Probenhalter (18) aufgenommen werden; und
mindestens eine Bewegungsvorrichtung (44), die dazu eingerichtet ist, mindestens eine Probe der mehreren Proben (12) relativ zu dem mindestens einen Probenhalter (18) zu bewegen,
**dadurch gekennzeichnet, dass**
der mindestens eine Probenhalter (18) dazu eingerichtet ist, die mehreren Proben (12) derart aufzunehmen, dass die mehreren Proben (12) in mindestens einem Anordnungsmuster angeordnet sind, das mehrere Spalten und mehrere Reihen von Proben einschließt;
wobei die mindestens eine Manövriervorrichtung (22) dazu eingerichtet ist, den mindestens einen Probenhalter (18) translatorisch zu manövrieren.

2. Probenwechselvorrichtung (10) nach einem der vorstehenden Ansprüche, wobei die Probenwechselvorrichtung (10) dazu eingerichtet ist, jede Probe der mehreren Proben (12) um eine Drehachse (X) herum zu drehen, mindestens teilweise während die jeweilige Probe (12) durch die mindestens eine Abbildungsvorrichtung (14) abgebildet wird.

3. Probenwechselvorrichtung (10) nach Anspruch 2, wobei die Probenwechselvorrichtung (10) derart konfiguriert ist, dass eine räumliche Position und eine räumliche Ausrichtung der Drehachse (X) für jede Probe der mehreren Proben (12) im Wesentlichen identisch sind.

4. Probenwechselvorrichtung (10) nach Anspruch 3, wobei die mindestens eine Manövriervorrichtung (22) dazu eingerichtet ist, die jeweilige abzubildende Probe (12) in eine Position zu manövrieren, durch die sich die Drehachse (X) erstreckt.

5. Probenwechselvorrichtung (10) nach einem der vorstehenden Ansprüche, wobei die mindestens eine Bewegungsvorrichtung (44) mindestens einen antreibbaren Drücker (48) einschließt, vorzugsweise an dem mindestens ein Magnet (52) angebracht ist, wobei der mindestens eine antreibbare Drücker (48) dazu eingerichtet ist, die Probe (12) in eine Abbildungsposition zu drücken.

6. Probenwechselvorrichtung (10) nach einem der vorstehenden Ansprüche, die ferner mindestens ein Abdeckelement (80) einschließt, das dazu eingerichtet ist, mindestens einen Abschnitt des mindestens einen Probenhalters (18), vorzugsweise einen oberen Abschnitt des mindestens einen Probenhalters (18), abzudecken, vorzugsweise selektiv und/oder abnehmbar abzudecken.

7. Probenwechselvorrichtung (10) nach Anspruch 6, wobei das mindestens eine Abdeckelement (80) mindestens eine Öffnung (84) einschließt, wobei die Probenwechselvorrichtung (10) dazu eingerichtet ist, vorzugsweise mittels der mindestens einen Bewegungsvorrichtung (44), jede Probe (12) mindestens teilweise durch die mindestens eine Öffnung (84), vorzugsweise eine Probe nach der anderen, in einen Zustand vorübergehend zu bewegen, in dem die jeweilige Probe (12) abgebildet wird.

8. Probenwechselvorrichtung (10) nach Anspruch 6 oder 7, wobei das mindestens eine Abdeckelement (80) mehrere Öffnungen (84) einschließt, wobei jede Öffnung (84) einer Probe der mehreren Proben (12) zugeordnet ist.

9. Probenwechselvorrichtung (10) nach Anspruch 7 oder 8, die ferner mindestens ein Verschlusselement (88) einschließt, das dazu eingerichtet ist, die Öffnung(en) (84) mindestens teilweise zu verschließen, wobei das mindestens eine Verschlusselement (88) bewegbar ist, vorzugsweise durch mindestens eine der Proben (12) ablenkbar ist, vorzugsweise wenn die jeweilige Probe (12) mindestens teilweise durch die mindestens eine Öffnung (84) verschoben wird, um der/den Probe(n) (12) zu ermöglichen, durch die mindestens eine Öffnung (84) verschoben zu werden.

10. Probenwechselvorrichtung (10) nach Anspruch 9, wobei das mindestens eine Verschlusselement (88) dazu eingerichtet ist, mindestens einen Abschnitt, vorzugsweise mehrere Abschnitte, der jeweiligen Probe (12) und/oder eine jeweilige Probenrückhaltevorrichtung (26) in Eingriff zu nehmen, mindestens wenn die jeweilige Probe (12) durch die jeweilige Öffnung (84) ragt.

11. Abbildungssystem, das mindestens eine Abbildungsvorrichtung (14), die dazu eingerichtet ist, jede mehrerer Proben (12) mindestens teilweise abzubilden, und mindestens eine Probenwechselvorrichtung (10) nach einem der vorstehenden Ansprüche einschließt.

12. Abbildungssystem nach Anspruch 11, wobei die mindestens eine Abbildungsvorrichtung (14) als eine strahlungsbasierte Abbildungsvorrichtung, vorzugsweise eine röntgenbasierte Abbildungsvorrichtung, vorzugsweise eine Mikro-Computertomographie-Vorrichtung, konfiguriert ist.

13. Verfahren zum Abbilden mehrerer Proben (12), das einschließt:
(a) Abbilden mindestens einer ersten Probe der mehreren Proben (12), die in mindestens einem Probenhalter (18) aufgenommen werden, mittels mindestens einer Abbildungsvorrichtung (14), wobei der mindestens eine Probenhalter (18) dazu eingerichtet ist, die mehreren Proben (12) derart aufzunehmen, dass die mehreren Proben (12) in mindestens einem Anordnungsmuster angeordnet sind, das mehrere Spalten und mehrere Reihen von Proben einschließt;
(b) translatorisches Manövrieren, nach einem Abschließen des Abbildens der mindestens einen ersten Probe, des mindestens einen Probenhalters (18), um die mindestens eine erste Probe und/oder mindestens eine als nächstes abzubildende zweite Probe der mehreren Proben (12) mittels mindestens einer Probenwechselvorrichtung (10), vorzugsweise durch die Probenwechselvorrichtung (10) nach einem der Ansprüche 1 bis 10, zu manövrieren, während die mehreren Proben (12) durch den mindestens einen Probenhalter (18) aufgenommen werden;
(c) Bewegen mindestens einer Probe der mehreren Proben (12) relativ zu dem mindestens einen Probenhalter (18) mittels mindestens einer Bewegungsvorrichtung (44); und
(d) Abbilden der mindestens einen zweiten Probe mittels der mindestens einen Abbildungsvorrichtung (14).

## Revendications

1. Dispositif de changement d'échantillon (10) conçu pour changer des échantillons d'une pluralité d'échantillons (12) pour au moins un dispositif d'imagerie (14) configuré pour imager au moins partiellement chaque échantillon de la pluralité d'échantillons (12), comportant :
au moins un support d'échantillon (18) conçu pour recevoir la pluralité d'échantillons (12) simultanément ;
au moins un dispositif de manœuvre (22) conçu pour manœuvrer au moins un échantillon de la pluralité d'échantillons (12) au moins entre des images d'échantillons consécutifs de la pluralité d'échantillons (12), lorsque la pluralité d'échantillons (12) est reçue par l'au moins un support d'échantillon (18) ; et
au moins un dispositif de déplacement (44) conçu pour déplacer au moins un échantillon de la pluralité d'échantillons (12) par rapport à l'au moins un support d'échantillon (18),
**caractérisé en ce que**
l'au moins un support d'échantillon (18) est conçu pour recevoir la pluralité d'échantillons (12) de telle sorte que la pluralité d'échantillons (12) est agencée dans au moins un motif de réseau comportant une pluralité de colonnes et une pluralité de rangées d'échantillons ;
dans lequel l'au moins un dispositif de manœuvre (22) est conçu pour manœuvrer l'au moins un support d'échantillon (18) en translation.

2. Dispositif de changement d'échantillon (10) selon l'une quelconque des revendications précédentes, dans lequel le dispositif de changement d'échantillon (10) est conçu pour faire tourner chaque échantillon de la pluralité d'échantillons (12) autour d'un axe de rotation (X), au moins partiellement pendant que l'échantillon respectif (12) est imagé par l'au moins un dispositif d'imagerie (14).

3. Dispositif de changement d'échantillon (10) selon la revendication 2, dans lequel le dispositif de changement d'échantillon (10) est conçu de telle sorte qu'une position spatiale et une orientation spatiale de l'axe de rotation (X) sont sensiblement identiques pour chaque échantillon de la pluralité d'échantillons (12).

4. Dispositif de changement d'échantillon (10) selon la revendication 3, dans lequel l'au moins un dispositif de manœuvre (22) est conçu pour manœuvrer l'échantillon (12) respectif à imager jusqu'à une position à travers laquelle l'axe de rotation (X) s'étend.

5. Dispositif de changement d'échantillon (10) selon l'une quelconque des revendications précédentes, dans lequel l'au moins un dispositif de déplacement (44) comporte au moins un poussoir entraînable (48), de préférence sur lequel au moins un aimant (52) est fixé, l'au moins un poussoir entraînable (48) étant conçu pour pousser l'échantillon (12) vers une position d'imagerie.

6. Dispositif de changement d'échantillon (10) selon l'une quelconque des revendications précédentes, comportant en outre au moins un élément de couverture (80) conçu pour couvrir, de préférence couvrir sélectivement et/ou de manière amovible, au moins une section de l'au moins un support d'échantillon (18), de préférence une section supérieure de l'au moins un support d'échantillon (18).

7. Dispositif de changement d'échantillon (10) selon la revendication 6, dans lequel l'au moins un élément de couverture (80) comporte au moins une ouverture (84), dans lequel le dispositif de changement d'échantillon (10) est conçu pour déplacer temporairement, de préférence au moyen de l'au moins un dispositif de déplacement (44), chaque échantillon (12) au moins partiellement à travers l'au moins une ouverture (84), de préférence un échantillon à la fois, dans un état dans lequel l'échantillon respectif (12) est imagé.

8. Dispositif de changement d'échantillon (10) selon la revendication 6 ou 7, dans lequel l'au moins un élément de couverture (80) comporte une pluralité d'ouvertures (84), dans lequel chaque ouverture (84) est associée à un échantillon de la pluralité d'échantillons (12).

9. Dispositif de changement d'échantillon (10) selon la revendication 7 ou 8, comportant en outre au moins un élément de fermeture (88) conçu pour fermer au moins partiellement la ou les ouvertures (84), dans lequel l'au moins un élément de fermeture (88) est mobile, de préférence déformable par au moins un des échantillons (12), de préférence lorsque l'échantillon respectif (12) est déplacé au moins partiellement à travers l'au moins une ouverture (84), pour permettre à l'échantillon ou aux échantillons (12) d'être déplacés à travers l'au moins une ouverture (84).

10. Dispositif de changement d'échantillon (10) selon la revendication 9, dans lequel l'au moins un élément de fermeture (88) est conçu pour venir en prise avec au moins une section, de préférence une pluralité de sections, de l'échantillon respectif (12) et/ou un dispositif de rétention d'échantillon respectif (26), au moins lorsque l'échantillon respectif (12) fait saillie à travers l'ouverture respective (84).

11. Système d'imagerie comportant au moins un dispositif d'imagerie (14) configuré pour imager au moins partiellement chacun d'une pluralité d'échantillons (12) et au moins un dispositif de changement d'échantillon (10) selon l'une quelconque des revendications précédentes.

12. Système d'imagerie selon la revendication 11, dans lequel l'au moins un dispositif d'imagerie (14) est configuré comme un dispositif d'imagerie par rayonnement, de préférence un dispositif d'imagerie à rayons X, de préférence un dispositif de microtomographie.

13. Procédé d'imagerie d'une pluralité d'échantillons (12), comportant :
(a) l'imagerie d'au moins un premier échantillon de la pluralité d'échantillons (12), qui sont reçus dans au moins un support d'échantillon (18), au moyen d'au moins un dispositif d'imagerie (14), dans lequel l'au moins un support d'échantillon (18) est conçu pour recevoir la pluralité d'échantillons (12) de telle sorte que la pluralité d'échantillons (12) est disposée dans au moins un motif de réseau comportant une pluralité de colonnes et une pluralité de rangées d'échantillons ;
(b) la manœuvre en translation, après avoir terminé l'imagerie de l'au moins un premier échantillon, de l'au moins un support d'échantillon (18) pour manœuvrer l'au moins un premier échantillon et/ou au moins un second échantillon à imager ensuite parmi la pluralité d'échantillons (12) au moyen d'au moins un dispositif de changement d'échantillon (10), de préférence par le dispositif de changement d'échantillon (10) selon l'une quelconque des revendications 1 à 10, pendant que la pluralité d'échantillons (12) est reçue par l'au moins un support d'échantillon (18) ;
(c) le déplacement d'au moins un échantillon de la pluralité d'échantillons (12) par rapport à l'au moins un support d'échantillon (18) au moyen d'au moins un dispositif de déplacement (44) ; et
(d) l'imagerie de l'au moins un second échantillon au moyen de l'au moins un dispositif d'imagerie (14).
